# DEMANDE DE BREVET EUROPEEN

(11) **EP 1 498 021 A1**
(43) Date de publication de la demande: **19.01.2005**
(21) Numéro de dépôt: 04291822.7
(22) Date de dépôt: 16.07.2004
(51) Int. Cl.: A01G 1/06

(54) **Pince et installation pour le traitement de plants de vigne**

(30) Priorité: 17.07.2003 FR 0308706
(71) Demandeur: Esox, 44470 Carquefou (FR)
(72) Inventeur: Surriray, Laurent, 44470 Thouare sur Loire (FR); Besse, Louis, 44240 Suce sur Erdre (FR); Sagot Duvauroux, Benoît, 44470 Mauves sur Loire (FR)
(74) Mandataire: Fosse, Danièle

(57) **Abrégé**

L'invention concerne une installation pour le traitement de plants (1) de vigne du type comportant au moins une pince (2) présentant au moins un espace de positionnement du plant (1) de vigne et des moyens (4) de maintien du plant dans ledit espace, cette pince (2) étant couplée à un transporteur la déplaçant depuis un poste de chargement en plants (1) vers un poste d'évacuation des plants (1) en passant par au moins un poste de traitement.

Cette installation est caractérisée en ce que la pince (2) comporte au moins deux espaces de positionnement du plant (1) de vigne disposés dans la continuité l'un de l'autre pour permettre notamment le passage du plant du premier espace dans le second espace, les moyens (4) de maintien assurant, en coopération avec chaque espace de positionnement, un maintien par serrage élastique dudit plant (1) dans son espace de positionnement.

## Description

La présente invention concerne une pince du type couplable à un transporteur pour le déplacement de plants de vigne depuis un poste de chargement en plants de vigne vers un poste d'évacuation desdits plants en passant par au moins un poste de traitement des plants, ladite pince comprenant au moins un espace de positionnement du plant de vigne et des moyens de maintien du plant dans ledit espace ainsi qu'une installation pour le traitement de plants de vigne, ladite installation comportant de préférence une pluralité de pince(s) du type précité.

Les plants de vigne sont des végétaux qui se présentent sous forme d'un porte-greffe susceptible de se prolonger à l'une de ses extrémités par des racines et à son autre extrémité par au moins une pousse. La commercialisation de tels plants de vigne s'est développée depuis de nombreuses années. Toutefois, pour permettre leur commercialisation, il est nécessaire de préparer ces plants de vigne, en particulier de les soumettre à des opérations de coupe des racines et des pousses lorsque ces dernières sont présentes, à des opérations de paraffinage de l'extrémité côté pousse dudit plant et à des opérations de désinfection et de contrôle de la soudure, la soudure correspondant à la zone du plant de vigne s'étendant dans la zone de liaison entre pousse et porte-greffe. Jusqu'à présent, toutes ces opérations sont réalisées manuellement. Il en résulte une perte de temps importante.

Un but de la présente invention est donc de proposer une installation pour le traitement de plants de vigne dont la conception permet la réalisation d'opérations de traitement de manière quasi automatique.

Un autre but de la présente invention est de proposer une installation pour le traitement de plants de vigne dont la conception permet d'utiliser une telle installation toute l'année alors que les opérations auxquelles le plant de vigne doit être soumis varient suivant généralement deux périodes, à savoir une première période s'étendant entre novembre et février et une seconde période s'étendant entre mars et juin.

A cet effet, l'invention a pour objet une installation pour le traitement de plants de vigne se présentant sous forme d'un porte-greffe susceptible de se prolonger à l'une de ses extrémités par des racines et à son autre extrémité par au moins une pousse, ladite installation comportant au moins une, de préférence une pluralité de, pince(s) présentant chacune au moins un espace de positionnement du plant de vigne et des moyens de maintien du plant dans ledit espace, chaque pince étant couplée à un transporteur pour déplacer ladite pince depuis un poste de chargement en plants vers un poste d'évacuation des plants en passant par au moins un, de préférence une pluralité de, poste(s) de traitement, caractérisée en ce que chaque pince comporte au moins deux espaces de positionnement du plant de vigne disposés dans la continuité l'un de l'autre pour permettre notamment le passage du plant du premier espace dans le second espace, les moyens de maintien assurant, en coopération avec chaque espace de positionnement, un maintien par serrage élastique dudit plant dans son espace de positionnement.

Grâce à la conception de l'installation, il est possible d'utiliser la pince soit pour les étapes de traitement devant être réalisées de novembre à février, soit pour les étapes de traitement s'effectuant entre mars et juin, le traitement des plants pendant cette seconde période incluant essentiellement une étape de paraffinage des plants. Dans ce second cas, la cadence de traitement des plants doit être élevée et il devient donc intéressant qu'une même pince permette, du fait qu'elle dispose d'au moins deux espaces de positionnement du plant de vigne, de permettre le chargement de deux plants sur une même pince.

Selon une forme de réalisation préférée de l'invention, les forces de serrage exercées par les moyens de maintien coopérant avec le premier espace sont d'intensité inférieure à celles exercées par les moyens de maintien coopérant avec le second espace de manière à permettre un pré-positionnement, éventuellement manuel, du plant dans le premier espace de la pince avant son positionnement définitif obtenu par introduction dans le second espace de la pince.

Grâce à ce mode de réalisation particulier des moyens de maintien, il est possible d'introduire manuellement les plants dans le premier espace de positionnement avant d'assurer un passage automatique par des moyens mécaniques appropriés du plant du premier espace vers le second espace. Ainsi, l'opérateur n'a pas à introduire ses doigts dans des zones qui peuvent présenter un danger potentiel.

Par ailleurs, ce serrage élastique différencié permet d'amener manuellement les plants dans le premier espace et de positionner correctement ces plants dans le premier espace, en particulier en les orientant par rotation dans ledit espace, cette orientation étant importante, en particulier lors du test de la soudure du plant. Par ailleurs, cette efficacité de serrage élastique moindre permet de repositionner axialement le plant lorsque cela est nécessaire. A l'inverse, lorsque ce positionnement parfait est obtenu, le passage du plant dans le second espace de positionnement permet de garantir le maintien du plant dans une position optimale au cours de son traitement.

L'invention sera bien comprise à la lecture de la description suivante d'exemples de réalisation, en référence aux dessins annexés dans lesquels :
- la figure 1 représente une vue schématique d'un plant de vigne conforme à l'invention ;
les figures 2A à 2C représentent des vues schématiques partielles d'une pince conforme à l'invention pour une utilisation de la pince sur une période s'étendant généralement de novembre à février ;
les figures 3A à 3C représentent des vues schématiques partielles d'une pince conforme à l'invention pour une utilisation s'étendant entre mars et juin ;

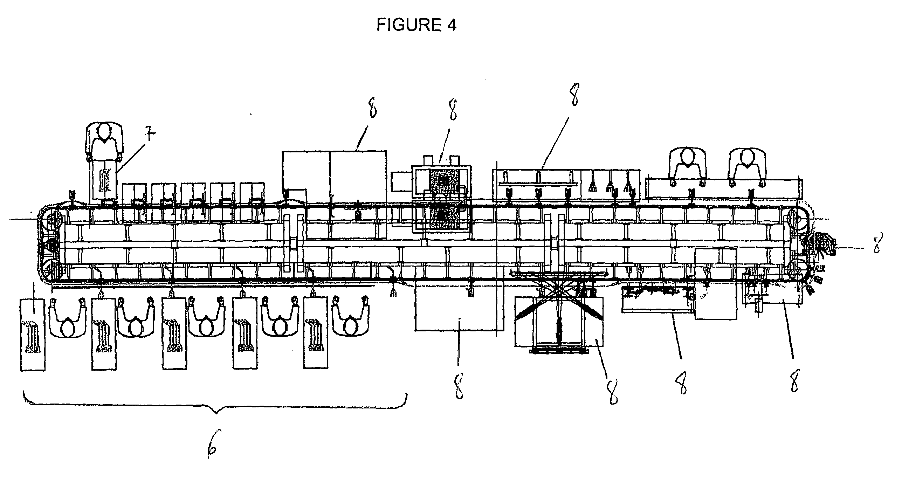

la figure 4 représente une vue schématique d'ensemble d'une installation conforme à l'invention et

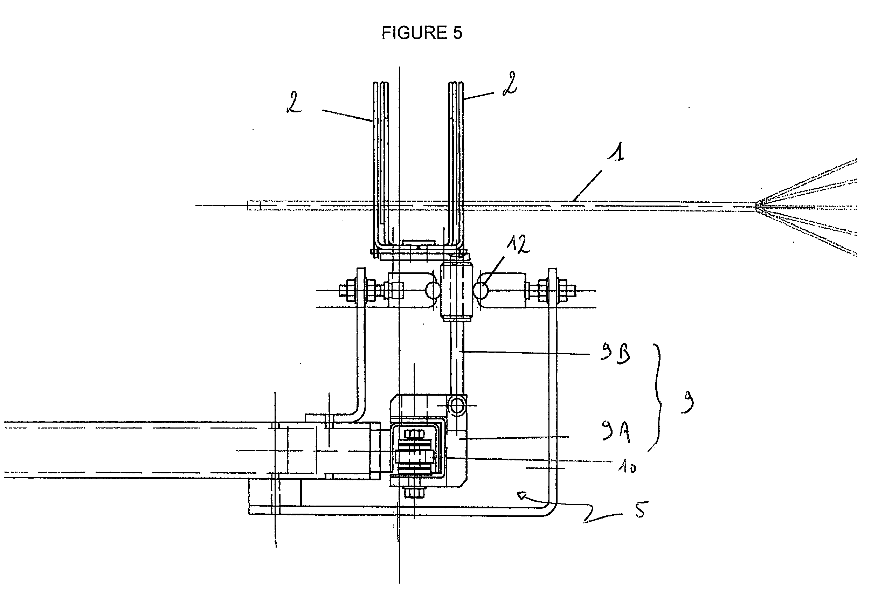

la figure 5 représente une vue en coupe de l'ensemble organe de transmission, support, pinces.

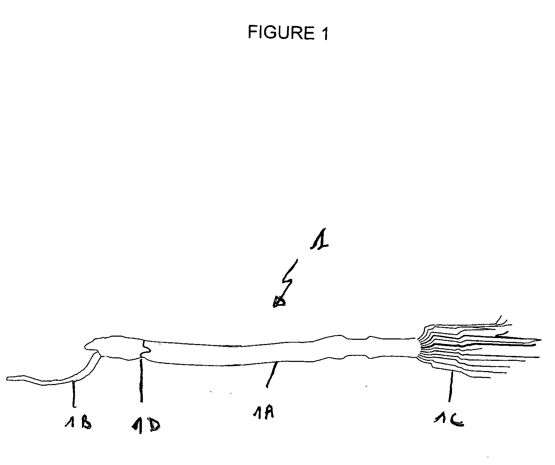

Comme mentionné ci-dessus, l'installation, objet de l'invention, est destinée au traitement de plants 1 de vigne se présentant sous forme d'un porte-greffe 1A susceptible de se prolonger à l'une de ses extrémités par des racines 1 C et à son autre extrémité par au moins une pousse 1 B. Dans le cas de produits conformes à la figure 1, les opérations effectuées sur la période qui s'étend de novembre à février permettent d'obtenir, en sortie d'installation, un plant 1 de vigne dont la pousse 1B a été partiellement coupée et les racines 1 C mises à longueur tandis que la soudure 1 D correspondant à la liaison entre porte-greffe et pousse ou greffon a été vérifiée. Lorsque cette même installation est utilisée pendant la période s'étendant de mars à juin, elle s'applique à des plants de vigne dépourvus de racines et de pousses, l'opération de traitement étant constituée essentiellement par une opération de reparaffinage des plants.

Cette installation comporte au moins une, de préférence une pluralité de, pince(s) 2 présentant chacune au moins un espace 3A de positionnement du plant 1 de vigne et des moyens 4 de maintien du plant dans ledit espace. Chaque pince 2 est couplée à un transporteur 5 pour déplacer ladite pince 2 depuis un poste 6 de chargement en plants 1 vers un poste 7 d'évacuation des plants 1 en passant par au moins un, de préférence une pluralité de, poste(s) 8 de traitement. Selon l'époque de l'année considérée, certains postes de traitement sont inactifs.

De manière caractéristique à l'invention, chaque pince 2 comporte au moins deux espaces 3A, 3B de positionnement du plant 1 de vigne. Ces espaces sont disposés dans la continuité l'un de l'autre pour permettre notamment le passage, de préférence automatique, du plant 1 du premier espace 3A dans le second espace 3B. Les moyens 4 de maintien assurent quant à eux, en coopération avec chaque espace 3A, 3B de positionnement, un maintien par serrage élastique dudit plant 1 dans son espace de positionnement.

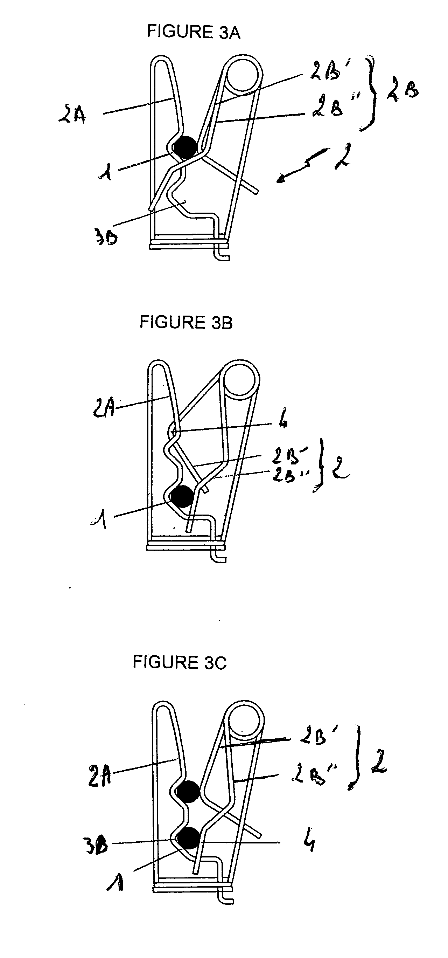

Pour permettre une utilisation de la machine de novembre à juin, de préférence les forces de serrage exercées par les moyens 4 de maintien coopérant avec le premier espace 3A sont d'intensité inférieure à celles exercées par les moyens 4 de maintien coopérant avec le second espace 3B. Ainsi, il est possible, une fois le plant 1 positionné dans le premier espace, d'orienter par rotation ou déplacement axial du plant, ce plant dans ledit espace avant de l'immobiliser définitivement dans la position choisie lors de son passage dans le second espace de positionnement. Par ailleurs, ces forces de serrage plus faibles dans le premier espace 3A permettent d'introduire manuellement le plant 1 de vigne dans le premier espace 3A de manière à augmenter la cadence d'une telle installation. A l'inverse, lors de la période s'étendant de mars à juin où seule une étape de reparaffinage des plants est nécessaire et/ou une orientation spécifique n'est plus obligatoire, la cadence d'une telle installation peut être augmentée puisqu'il est possible alors de charger sur une même pince au moins deux plants. Ce chargement correspond à celui représenté aux figures 3A à 3C.

Généralement, pour permettre un maintien optimal de chaque plant 1 de vigne, chaque pince est appariée avec une pince similaire. Il est ainsi possible d'assurer un maintien du plant 1 en au moins deux points de sa longueur.

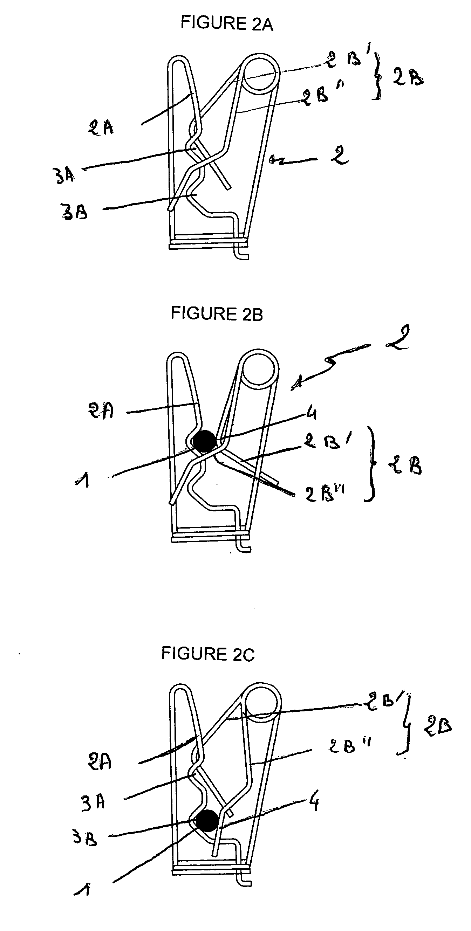

La pince 2 peut quant à elle affecter un grand nombre de formes. Dans les exemples représentés, en particulier aux figures 2A à 2C et 3A à 3C, la pince 2 comporte au moins deux branches 2A, 2B réalisées de préférence à partir de fil, de préférence métallique. Les espaces 3A, 3B de positionnement sont formés à chaque fois par une encoche de l'une des branches 2A, 2B de la pince. Cette encoche ménageant un renfoncement dans la branche de la pince affecte à chaque fois la forme d'un V couché de telle sorte que chaque branche du V constitue un guide d'entrée ou de sortie du plant dudit espace sous l'effet d'un effort axial dans un plant s'étendant entre lesdites branches. La réalisation de la pince sous forme de fil métallique conformé pour obtenir les espaces de positionnement permet notamment, lors des opérations de paraffinage, d'empêcher la paraffine d'adhérer à la pince. La pince est ainsi une pince autonettoyante.

Dans les exemples représentés, les espaces 3A, 3B de positionnement sont ménagés sur une même branche 2A de la pince 2. L'autre branche 2B de la pince est constituée d'au moins deux brins 2B', 2B" élastiquement déformables coopérant chacun avec un espace 3A, 3B de positionnement de la première branche 2A de la pince 2 en s'écartant au passage d'insertion du plant jusque dans l'espace de positionnement et en étant rappelés dans une position dans laquelle ils exercent une force de poussée élastique en direction de l'espace de positionnement et de retenue avec lequel ils coopèrent de manière à enserrer un emplacement généralement prédéterminé du plant entre lesdites branches. Cette portion de la branche 2B élastiquement en regard de l'espace de positionnement de l'autre branche de pince constitue le moyen de maintien du plant 1. Chaque brin 2B', 2B", élastiquement déformable de la branche 2B de la pince, constitue, dans les exemples représentés, l'une des branches d'une pince à ressort. Ce brin est ainsi relié par l'intermédiaire d'une boucle à ressort à une autre branche d'une pince à ressort, cette autre branche étant inactive.

Ainsi, comme les pinces fonctionnent par paire, le plant 1 de vigne est retenu en deux emplacements déterminés de sa longueur dans les pinces qui sont solidaires en déplacement. Pour aider à ce chargement de la pince, de préférence de la paire de pinces, le poste de chargement de chaque pince 2 ou paire de pinces comporte d'une part des moyens, de préférence optiques, d'aide au positionnement des plants dans les pinces, d'autre part des moyens automatiques d'entraînement en déplacement des plants depuis le premier espace 3A de positionnement de plant vers le second espace de positionnement du plant 1 de ladite pince 2. Ces moyens d'entraînement en déplacement agissent par simple poussée sur le plant 1 une fois ce dernier introduit manuellement ou mécaniquement dans le premier espace 3A de positionnement. Ainsi, les moyens optiques peuvent être constitués de moyens de projection d'une raie lumineuse sur une surface positionnée au voisinage du transporteur 5. De manière équivalente, les moyens d'aide au positionnement axial du plant dans la pince peuvent être constitués par un repère mécanique. Chaque plant 1 est alors positionné dans une pince 2 ou paire de pinces de manière telle que la soudure 1D du plant correspondant à la zone de liaison entre porte-greffe 1A et pousse 1B s'étende à l'aplomb de ladite raie. Ce repérage du positionnement est important pour les étapes ultérieures auxquelles sera soumis le plant. Les moyens d'entraînement sont quant à eux constitués de butées mobiles venant en appui sur le plant 1 une fois ce dernier introduit dans le premier espace 3A de positionnement d'une pince 2. Ces butées exercent, au cours de leur déplacement, une force de poussée sur le plant 1 pour l'amener du premier espace 3A jusqu'au second espace 3B de positionnement, lesdits espaces 3A, 3B étant sensiblement alignés. Ainsi, lors d'une introduction manuelle dans le premier espace 3A de positionnement, le plant est d'une part positionné axialement à l'intérieur de ladite pince, d'autre part il peut être entraîné manuellement en rotation pour lui conférer une orientation conforme à celle recherchée en fonction des opérations ultérieures à effectuer. Une fois cette orientation et cette position axiale déterminées, les moyens d'entraînement peuvent alors être activés pour entraîner en déplacement le plant 1 jusque dans l'espace 3B de positionnement où le plant est définitivement immobilisé dans sa position prédéterminée. Les opérations de traitement du plant peuvent alors commencer. A cet effet, le poste de chargement est suivi d'un poste de lavage et d'un poste de contrôle de la racine. Globalement, les opérations de traitement d'un plant lorsque la période de traitement s'étend entre novembre et février sont telles que suit. Il convient dans un premier temps de charger le plant sur la pince puis de procéder à un lavage de ce dernier afin de pouvoir contrôler la racine. Ensuite, il est procédé à un test de la soudure du porte-greffe en vue de vérifier sa résistance mécanique. A ce stade, les plants non conformes sont éjectés des pinces. Les pousses et les racines sont ensuite coupées à longueur et une deuxième pousse, lorsqu'elle est présente, est également éliminée. Les plants sont ensuite désinfectés puis séchés avant d'être paraffinés côté pousse du plant. La couche de paraffine à poser est refroidie par eau réfrigérée puis les plants sont évacués et comptés.

Le poste de contrôle de la racine peut être constitué d'au moins une, de préférence trois, caméras et de moyens de traitement des prises de vue issues des caméras en vue de reconstituer une image en une ou trois dimensions des racines et déterminer le volume racinaire. A ce poste, il est également déterminé le diamètre du porte-greffe qui servira ultérieurement. Ensuite, il est prévu, entre le poste de chargement et le poste d'évacuation, généralement après le poste de contrôle de la racine, un poste de test de la zone du plant s'étendant entre la pousse du plant et le porte-greffe et appelée soudure 1D du plant. Ce poste de test comporte d'une part des moyens de prise en sandwich de la zone du plant s'étendant d'un côté de la soudure, d'autre part des moyens mécaniques, tels qu'un rouleau, d'application d'une pression sur la zone du plant s'étendant de l'autre côté de la soudure. Ces moyens mécaniques d'application de pression sont couplés à des moyens d'analyse du fléchissement du plant en vue de tester la solidité de la soudure. En d'autres termes, une pression mécanique en rapport avec le diamètre du porte-greffe déterminé au poste de test de la racine est appliquée sur la soudure. La réaction est analysée pour déterminer la solidité de la soudure. Pour réaliser cette fonction, le bon maintien du plant est important. Ce maintien est donc assuré par les tapis de type sandwich. A ce stade, les plants non conformes sont éjectés de la pince en vue d'une reprise manuelle. Il est en effet prévu en aval de certains postes des moyens d'éjection automatique des plants desdites pinces. Ces moyens provoquent un déplacement du plant de l'espace 3B vers l'espace 3A et obligent le plant à poursuivre son déplacement au-delà de l'espace 3A. Le plant 1 n'est alors plus retenu par la pince 2. Cette éjection peut s'accompagner d'un signal sonore ou lumineux pour alerter un opérateur lorsque le bac servant à la réception des produits éjectés est plein. Il est encore prévu, entre le poste 6 de chargement des plants 1 et le poste 7 d'évacuation des plants 1, des postes de coupe des pousses et/ou des racines. Généralement un plant de vigne initial comporte un porte-greffe d'une longueur comprise entre 24 et 40 cm, des racines d'une longueur maximum de 30 cm et des pousses d'une longueur maximum de 40 cm. En sortie de l'installation, les racines présentent une dimension de 0,5 à 20 cm et les pousses une dimension de 2 à 3 cm, le porte-greffe demeurant bien évidemment inchangé. La précision de la coupe de la pousse est donnée par le positionnement effectué au poste de chargement par l'intermédiaire de la raie laser. La coupe des racines est quant à elle effectuée au moyen d'organes de coupe dont les positions sont préréglées manuellement. Les prises de vue du plan permettent de choisir d'activer l'un ou l'autre de ces organes de coupe. La précision dépend de la longueur initiale de chaque plant. Il peut être également envisagé une coupe de la deuxième pousse. Cette coupe est généralement effectuée manuellement et permet d'éliminer une pousse lorsque le plant en présente deux. Ces opérations de coupe s'effectuent au moyen d'organes de coupe appropriés tels que des scies circulaires positionnées le long de la trajectoire de déplacement des pinces.

Enfin, il est prévu un poste de désinfection des plants par pulvérisation sur les plants d'un désinfectant, ou trempage des plants dans un bain de désinfectant. Ce poste est suivi d'un poste de séchage de la partie du plant terminée par la pousse. Ce séchage s'effectue de préférence par soufflage d'air chaud ou froid. La température doit être contrôlée avec précision pour ne pas dépasser une température d'air supérieure à 50°C qui serait dommageable aux plants.

Enfin, il est également prévu un poste de paraffinage de l'extrémité côté pousse des plants de vigne. Ce paraffinage est généralement réalisé par trempage dans un bain de paraffine, la durée de ce trempage étant comprise entre 1 et 1,5 seconde. La paraffine est refroidie dans un bain d'eau froide. Une fois l'ensemble de ces opérations effectuées, les plants de vigne sont alors évacués sous forme de botte de 25 avec alignement des pousses puis comptés par des moyens appropriés. Ces plants sont alors stockés dans un bac en vue d'une évacuation.

Pour permettre le passage d'un poste à un autre, le transporteur 5 est constitué d'un organe 10 de transmission sans fin, tel qu'une chaîne, portant une pluralité de supports 9, eux-mêmes associés chacun à une pince 2, de préférence à une paire de pinces 2. Chaque support 9 porte-pinces est constitué d'une partie 9A fixée à l'organe 10 de transmission et d'une partie 9B porte-pince montée à rotation sur la partie 9A du support, cette partie 9B porte-pince étant guidée en déplacement angulaire par l'intermédiaire d'organes 12 de guidage, tels que des rails, permettant une variation de l'orientation angulaire de la pince ou de la paire de pinces au cours de son déplacement entre le poste 6 de chargement et le poste 7 d'évacuation. C'est ce déplacement angulaire qui permet notamment de réaliser des opérations de trempage des plants dans différents bains.

Pendant la période s'étendant de mars à juin, le traitement des plants consiste uniquement en un reparaffinage de l'extrémité côté pousse, étant entendu qu'à ce stade, les plants sont généralement débarrassés de leurs pousses et de leurs racines. Il devient alors important, l'orientation n'ayant plus aucun intérêt, d'augmenter les cadences de l'installation. Dans ce cas, la pince est alors chargée de deux plants introduits sur une même pince. Le premier plant peut être à nouveau introduit manuellement dans le premier espace 3A de positionnement puis entraîné mécaniquement en déplacement jusqu'au deuxième espace 3B de positionnement avant de réintroduire manuellement un nouveau plant dans l'espace 3A de positionnement. Le fait que le serrage élastique effectué dans le premier espace 3A de positionnement soit plus faible, n'a aucune incidence dans la mesure où l'orientation du plant n'est pas déterminante pour les opérations de traitement à effectuer. La pince peut ainsi être entraînée en déplacement jusqu'au poste de paraffinage où les plants sont traités avant d'être évacués de l'installation. Grâce à cette possibilité de charger chaque pince au moyen de deux plants, la cadence de l'installation est augmentée.

## Revendications

1. Installation pour le traitement de plants (1) de vigne se présentant sous forme d'un porte-greffe (1A) susceptible de se prolonger à l'une de ses extrémités par des racines (1C) et à son autre extrémité par au moins une pousse (1B), ladite installation comportant au moins une, de préférence une pluralité de, pince(s) (2) présentant chacune au moins un espace (3A) de positionnement du plant (1) de vigne et des moyens (4) de maintien du plant dans ledit espace (3A), chaque pince (2) étant couplée à un transporteur (5) pour déplacer ladite pince (2) depuis un poste (6) de chargement en plants (1) vers un poste (7) d'évacuation des plants (1) en passant par au moins un, de préférence une pluralité de, poste(s) (8) de traitement,
**caractérisée en ce que** chaque pince (2) comporte au moins deux espaces (3A, 3B) de positionnement du plant (1) de vigne disposés dans la continuité l'un de l'autre pour permettre notamment le passage du plant (1) du premier espace (3A) dans le second espace (3B), les moyens (4) de maintien assurant, en coopération avec chaque espace (3A, 3B) de positionnement, un maintien par serrage élastique dudit plant (1) dans son espace (3A) ou (3B) de positionnement.

2. Installation selon la revendication 1,
**caractérisée en ce que** les forces de serrage exercées par les moyens (4) de maintien coopérant avec le premier espace (3A) sont d'intensité inférieure à celles exercées par les moyens (4) de maintien coopérant avec le second espace (3B) de manière à permettre un pré-positionnement, éventuellement manuel, du plant (1) dans le premier espace (3A) de la pince avant son positionnement définitif obtenu par introduction dans le second espace (3B) de la pince (2).

3. Installation selon l'une des revendications 1 et 2,
**caractérisée en ce que** chaque pince (2) est appariée avec une pince similaire pour permettre un maintien du plant (1) en au moins deux points de sa longueur.

4. Installation selon l'une des revendications 1 à 3,
**caractérisée en ce que** la pince (2) comporte au moins deux branches (2A, 2B) réalisées de préférence à partir de fil, de préférence métallique, les espaces (3A, 3B) de positionnement étant formés à chaque fois par une encoche de l'une des branches (2A, 2B) de la pince (2).

5. Installation selon la revendication 4,
**caractérisée en ce que** les espaces (3A, 3B) de positionnement sont ménagés sur une même branche (2A) de la pince (2), l'autre branche (2B) de la pince étant constituée d'au moins deux brins (2B', 2B") élastiquement déformables coopérant chacun avec un espace (3A, 3B) de positionnement de la première branche (2A) de la pince (2) en s'écartant au passage d'insertion du plant (1) jusque dans l'espace de positionnement et en étant rappelés dans une position dans laquelle ils exercent une force de poussée élastique en direction de l'espace (3A, 3B) de positionnement et de retenue avec lequel ils coopèrent de manière à enserrer un emplacement généralement prédéterminé du plant (1) entre lesdites branches (2A, 2B') ou (2A, 2B").

6. Installation selon l'une des revendications 1 à 5,
**caractérisée en ce que** le poste de chargement de chaque pince (2) de positionnement en plant (1) comporte d'une part des moyens, de préférence optiques, d'aide au positionnement des plants dans chaque pince, d'autre part des moyens automatiques d'entraînement en déplacement des plants depuis le premier espace (3A) de positionnement de plant vers le second espace (3B) de positionnement du plant (1) de ladite pince (2), ces moyens agissant par simple poussée sur le plant (1) une fois ce dernier introduit manuellement ou mécaniquement dans le premier espace (3A) de positionnement.

7. Installation selon la revendication 6,
**caractérisée en ce que** les moyens optiques sont constitués de moyens de projection d'une raie lumineuse sur une surface positionnée au voisinage du transporteur (5), chaque plant (1) étant positionné dans une pince (2) de manière telle que la soudure (1D) du plant (1) correspondant à la zone de liaison entre porte-greffe (1A) et pousse (1B) s'étende à l'aplomb de ladite raie lumineuse.

8. Installation selon la revendication 6,
**caractérisée en ce que** les moyens d'entraînement sont constitués de butées mobiles venant en appui sur le plant (1) une fois ce dernier introduit dans le premier espace (3A) de positionnement d'une pince (2), ces butées exerçant, au cours de leur déplacement, une force de poussée sur le plant (1) pour l'amener du premier espace (3A) jusqu'au second espace (3B) de positionnement, lesdits espaces (3A, 3B) étant sensiblement alignés.

9. Installation selon l'une des revendications 1 à 8,
**caractérisée en ce que** le poste de chargement est suivi d'un poste de lavage et d'un poste de contrôle de la racine du type constitué d'au moins une, de préférence trois, caméras et de moyens de traitement des prises de vue issues des caméras en vue de reconstituer une image en une ou trois dimensions des racines et déterminer le volume racinaire.

10. Installation selon l'une des revendications 1 à 9,
**caractérisé en ce qu'**il est prévu entre le poste de chargement et le poste d'évacuation un poste de test de la zone du plant (1) s'étendant entre la pousse (1B) du plant et le porte-greffe (1A) et appelée soudure (1D) du plant (1), ce poste de test comportant d'une part des moyens de prise en sandwich de la zone du plant (1) s'étendant d'un côté de la soudure (1D), d'autre part des moyens mécaniques, tels qu'un rouleau, d'application d'une pression sur la zone du plant s'étendant de l'autre côté de la soudure (1D), ces moyens mécaniques d'application de pression étant couplés à des moyens d'analyse du fléchissement du plant en vue de tester la solidité de la soudure (1D).

11. Installation selon l'une des revendications 1 à 10,
**caractérisée en ce qu'**il est prévu, entre le poste (6) de chargement des plants (1) et le poste (7) d'évacuation des plants (1), des postes de coupe des pousses et/ou des racines.

12. Installation selon l'une des revendications 1 à 11,
**caractérisée en ce qu'**il est prévu, en aval de certains postes, des moyens d'éjection automatique des plants desdites pinces.

13. Installation selon l'une des revendications 1 à 12,
**caractérisée en ce qu'**elle comporte en outre au moins un poste de désinfection des plants par pulvérisation d'un désinfectant ou trempage des plants dans un bain de désinfectant et au moins un poste de séchage, de préférence par soufflage d'air chaud, des plants.

14. Installation selon l'une des revendications 1 à 13,
**caractérisée en ce qu'**elle comporte au moins un poste de paraffinage de l'extrémité côté pousse des plants (1) de vigne.

15. Installation selon l'une des revendications 1 à 14,
**caractérisée en ce que** le transporteur (5) est constitué d'un organe (10) de transmission sans fin, tel qu'une chaîne, portant une pluralité de supports (9), eux-mêmes associés chacun à une pince (2), de préférence à une paire de pinces (2), lesdits supports (9) porte-pinces (2) étant constitués d'une partie (9A) fixée à l'organe (10) de transmission et d'une partie (9B) porte-pince montée à rotation sur la partie (9A) du support (9), cette partie (9B) porte-pince étant guidée en déplacement angulaire par l'intermédiaire d'organes (12) de guidage, tels que des rails, permettant une variation de l'orientation angulaire de la pince ou de la paire de pinces au cours de son déplacement entre poste (6) de chargement et poste (7) d'évacuation.

16. Pince (2) du type couplable à un transporteur (5) pour le déplacement de plants (1) de vigne depuis un poste (6) de chargement en plants (1) de vigne vers un poste (7) d'évacuation desdits plants en passant par au moins un poste de traitement des plants, ladite pince (2) comprenant au moins un espace (3A) de positionnement du plant (1) de vigne et des moyens (4) de maintien du plant (1) dans ledit espace (3A),
**caractérisée en ce que** la pince comporte au moins deux espaces (3A, 3B) de positionnement du plant (1) de vigne disposés dans la continuité l'un de l'autre pour permettre notamment, le passage, de préférence automatique, du plant (1) du premier espace (3A) dans le second espace (3B), les moyens (4) de maintien assurant, en coopération avec chaque espace (3A, 3B) de positionnement, un maintien par serrage élastique dudit plant (1).

17. Pince (2) selon la revendication 16,
**caractérisée en ce que** les forces de serrage exercées par les moyens (4) de maintien coopérant avec le premier espace (3A) sont d'intensité inférieure à celles exercées par les moyens (4) de maintien du second espace (3B) de manière à permettre d'une part un pré-positionnement, éventuellement manuel, du plant (1) sur la pince (2) avant son positionnement définitif, d'autre part le chargement d'au moins deux plants (1) sur une même pince (2).
